(19) Europäisches Patentamt
European Patent Office
Office européen des brevets

(11) Veröffentlichungsnummer: **0 351 500 B1**

(12) **EUROPÄISCHE PATENTSCHRIFT**

(45) Veröffentlichungstag der Patentschrift: **08.12.93**

(51) Int. Cl.5: **C08K 5/54**, C08L 15/00, C08L 11/00, C08L 15/02, C08L 23/34

(21) Anmeldenummer: **89106991.6**

(22) Anmeldetag: **19.04.89**

# (54) Vulkanisierbare organyloxysilylfunktionelle Thioharnstoffe enthaltende Halogenkautschukmischungen.

(30) Priorität: **25.06.88 DE 3821463**

(43) Veröffentlichungstag der Anmeldung:
**24.01.90 Patentblatt 90/04**

(45) Bekanntmachung des Hinweises auf die Patenterteilung:
**08.12.93 Patentblatt 93/49**

(84) Benannte Vertragsstaaten:
**AT BE CH DE ES FR GB IT LI LU NL**

(56) Entgegenhaltungen:
**EP-A- 0 126 870**
**DE-A- 2 819 638**

(73) Patentinhaber: **Degussa Aktiengesellschaft**
**Weissfrauenstrasse 9**
**D-60311 Frankturt(DE)**

(72) Erfinder: **Wolff, Siegfried, Dr.**
**Weiherstrasse 28**
**D-5303 Bornheim-Merten(DE)**
Erfinder: **Grewatta, Heinz**
**Rondorfer Hauptstrasse 107**
**D-5000 Köln 50(DE)**

**EP 0 351 500 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft vulkanisierbare Halogenkautschukmischungen, die einen silikatischen Füllstoff, gegebenenfalls in Mischung mit Ruß, und mindestens einen substituierten organyloxysilylfunktionellen Thioharnstoff enthalten.

Es ist bekannt, daß in mit Schwefel vulkanisierbaren Kautschuk-Mischungen, die einen höheren Anteil an silikatischen Füllstoffen wie beispielsweise gefällte Kieselsäure enthalten sollen, als Mischungsbestandteil ein Silan notwendig ist, um den Vulkanisaten ausreichend gute Eigenschaften zu verleihen.

In der DE-AS 28 19 638 wird beschrieben, daß aus silikatische Füllstoffe enthaltenden Kautschuk-Mischungen auf der Basis von halogenhaltigen Kautschuksorten wertvolle Vulkanisationsprodukte entstehen, wenn die Mischungen bestimmte halogenhaltige Silane enthalten.

Derartige Mischungen nach dem Stand der Technik enthalten als Vulkanisationsbeschleuniger häufig Verbindungen aus der Thioharnstoffklasse.

Diese werden jedoch ebenso wie die daraus bei der Vulkanisation entstehenden Spaltprodukte als toxikologisch bedenklich eingestuft.

(Eholzer, Kempermann in Gummi, Asbest, Kunststoffe 36(1983)9 Gegenstand der Erfindung sind vulkanisierbare Kautschukmischungen, enthaltend mindestens einen Halogenkautschuk, silikatischen Füllstoff,

dadurch gekennzeichnet,

daß sie als Beschleuniger mindestens einen substituierten trialkoxysilylfunktionellen Thioharnstoff der allgemeinen Formel (I)

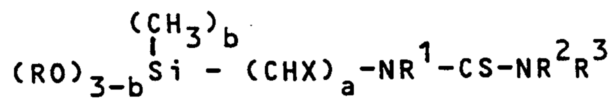

oder der allgemeinen Formel (II)

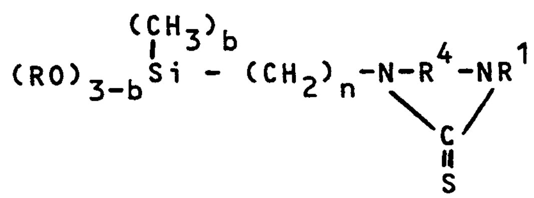

in einer Menge von 0,5 - 5,0 phr enthalten, wobei bedeuten:

- b: 0;1 oder 2
- R: Alkyl mit 1 bis 6 C-Atomen
  Cycloalkyl mit 5 bis 7 C-Atomen
  Aryl, insbesondere Phenyl
- X: Wasserstoff, wenn a = 1, 3, 4, 5 oder 6,
  oder X:

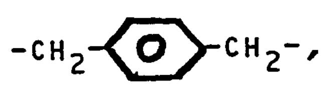

  wenn a = 1
- $R^1$: Wasserstoff,

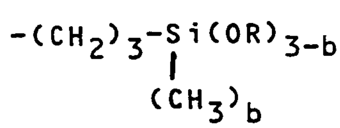

$R^2$: Wasserstoff

$R^2$,$R^3$: gleich oder verschieden,
Alkyl mit 1 bis 8 C-Atomen,
Alkenyl mit 1 bis 8 C-Atomen,
Aryl, insbesondere Phenyl, Naphthyl, Aralkyl, insbesondere Benzyl, Phenethyl,

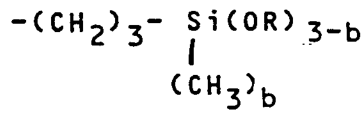

$R^4$: Alkylen mit 1 bis 4 C-Atomen,
insbesondere $-CH_2-CH_2-$ ,
Arylen, insbesondere 1,2-Phenylen

n: eine ganze Zahl von 1 bis 6, insbesondere 1 oder 3.

Bevorzugt eingesetzt werden

SL 34-3-3 N-(Triethoxisilylpropyl)-N'-butylthioharnstoff
SL 34-3-5 N-(Triethoxisilylpropyl)-N'-propylthioharnstoff
SL 34-3-6 N-(Triethoxisilylpropyl)-N'-cyclohexylthioharnstoff
SL 34-3-8 N-(Triethoxisilylpropyl)-N'-dodecylthioharnstoff
SL 34-3-9 N-(Triethoxisilylpropyl)-N',N'-dibutylthioharnstoff
SL 34-3-4 Bis-(N,N'-triethoxisilylpropyl)-thioharnstoff
SL 34-2-6 N-(Trimethoxisilylpropyl)-ethylenthioharnstoff
SL 34-3-12 N-(Triethoxisilylpropyl)-ethylenthioharnstoff

Die sonstigen Bestandteile von vulkanisiserbaren Halogenkautschukmischungen sind dem Fachmann an sich bekannt.

Zu den verwendbaren Halogenkautschuken zählen beispielsweise halogenierte Butylkautschuke, insbesondere bromierte oder chlorierte Butylkautschuke, Chlorkautschuke, Kautschukhydrochloride und vorzugsweise halogenierte Butylkautschuke und insbesondere die Polymeren von 2-Chlorbutadien-1,3. Es kann auch chlorsulfoniertes Polyäthylen eingesetzt werden.

Die nach der Erfindung verwendbaren silikatischen Füllstoffe, auch als Mischung von zwei oder mehr Füllstoffen, sind an sich in der Kautschuktechnologie bekannte Füllstoffe. Dabei ist der Begriff "silikatischer Füllstoff" ein weitgefaßter und bezieht sich auf mit Kautschuken verträgliche bzw. in Kautschukmischungen einarbeitbare Füllstoffe, die aus Silikaten bestehen, Silikate enthalten und bzw. oder Silikate im weitesten Sinne chemisch gebunden enthalten. Insbesondere zählen zu den silikatischen Füllstoffen:

Hochdisperse Kieselsäure-Füllstoffe (Siliciumdioxid) mit spezifischen Oberflächen (BET-Oberfläche gemessen mit $N_2$) im Bereich von etwa 5 bis 300, vorzugsweise 5 bis 250 $m^2/g$ und mit Primärteilchengrößen im Bereich von etwa 10 bis 400 nm, die hergestellt werden können z.B. durch Ausfällung aus Lösungen von Silikaten mit anorganischen Säuren, durch hydrothermalen Aufschluß, durch hydrolytische und bzw. oder oxidative Hochtemperaturumsetzung von flüchtigen Siliciumhalogeniden oder durch ein Lichtbogenverfahren. Diese Kieselsäuren können gegebenenfalls auch als Mischoxide oder Oxidgemische mit den Oxiden der Metalle Aluminium. Magnesium, Calcium, Barium, Zink, Zirkon und/oder Titan vorliegen.

Synthetische Silikate z.B. Aluminiumsilikat oder Erdalkalisilikate wie Magnesium- oder Calciumsilikat, mit spezifischen Oberflächen von etwa 20 bis 300 $m^2/g$ und Primärteilchengrößen von etwa 10 bis 400 nm.

Natürliche Silikate, z.B. Kaoline, Tone, Clays sowie natürliche Kieselsäuren wie beispielsweise Quarz und Kieselgur.

Glasfasern und Glasfasererzeugnisse wie Matten, Stränge, Gewebe, Gelege und dergleichen sowie Mikroglaskugeln.

Als Füllstoffmischungen können genannt werden Kieselsäure/Kaolin oder Kieselsäure/Glasfasern/Asbest sowie Verschnitte der silikathaltigen Verstärkerfüllstoffe mit den bekannten Gummirußen, z.B. Kieselsäure/ISAF-Ruß oder Kieselsäure/Glasfaserkord/HAF-Ruß.

Erfindungsgemäß werden als silikatische Füllstoffe die hochdispersen oder aktiven Kieselsäuren vorgezogen, insbesondere die gefällten Kieselsäuren und diese vorzugsweise in Mengen von 5 bis 50 Gewichtsteilen, insbesondere bezogen auf 100 Gewichtsteile Kautschuk.

Ruß kann zusätzlich in den erfindungsgemäßen Kautschuk-Mischungen zugegen sein, nicht nur zur Grau- oder Schwarzfärbung der Vulkanisate, sondern zur Erzielung von besonderen, wertvollen Vulkanisationseigenschaften, wobei die bekannten Gummiruße vorgezogen werden. Der Ruß wird in Mengen von bis

zu 150 Gewichtsteilen, vorzugsweise von 0,1 - 80 Gew.-Teile, bezogen auf 100 Gewichtsteile Kautschuk, in den neuen Kautschuk-Mischungen eingesetzt.

Für den Fall des gleichzeitigen Vorhandenseins von silikatischem Füllstoff und Ruß in den Kautschuk-Mischungen wird der Gesamtfüllstoffgehalt, bezogen auf 100 Gewichtsteile Kautschuk, auf maximal 400 Gewichtsteile begrenzt. Bei ausschließlicher Verwendung von aktiver Kieselsäure kann man 150 Gewichtsteile als obere Grenze ansehen.

An sich bekannte Stabilisierungsmittel, insbesondere solche aus der Gruppe der Alterungsschutzmittel, der Ermüdungsschutzmittel, der Oxidationsschutzmittel, der Lichtschutzmittel und der Ozonschutzmittel sowie auch Mischungen von diesen können mit Vorteil in den erfindungsgemäßen Kautschukmischungen zugegen sein, und zwar in Mengen von 0,2 bis 10 Gewichtsteilen, bezogen auf 100 Gewichtsteile des Halogenkautschuks.

Ferner kann es von besonderem Vorteil sein, wenn die Halogenkautschukmischungen Weichmacher oder Weichmacheröle enthalten, beispielsweise hocharomatische naphthenische oder paraffinische Weichmacheröle, vorteilhafterweise solche mit niedrigen Stockpunkten etwa zwischen 0° und -60°C. Der Mengenanteil an Weichmacheröl kann in weiten Grenzen schwanken, so kann er mehr als 0,5 oder 5 Gewichtsteile betragen, insbesondere mehr als 10 bis etwa 100 Gewichtsteile.

Die neuen Halogenkautschuk-Mischungen enthalten vorzugsweise eine organische, bei Zimmertemperatur feste Säure, wie sie in der Kautschuktechnologie Verwendung finden, in Mengen von 0,2 bis 10 Gewichtsteilen, bezogen auf 100 Gewichtsteile des Kautschuks, vorzugsweise Fettsäuren wie Stearinsäure oder entsprechende Säuren der homologen Reihe, ferner Benzoe- oder Salicylsäure.

Weiterhin müssen den erfindungsgemäßen Kautschukmischungen Oxide von mehrwertigen Metallen, wie sie ebenfalls in der Kautschuktechnologie Verwendung finden, in Mengen von 1 - 10 Gewichtsteilen, bezogen auf 100 Gewichtsteile des Kautschuks hinzugefügt werden. Zu diesen Metalloxiden zählt in erster Linie das Zinkoxid, insbesondere in feinteiliger und bzw. oder aktiver Form. Weiterhin sind gut verwendbar Magnesiumoxid oder gegebenenfalls Bleioxid. Diese Oxide werden vorzugsweise in feinteiliger, aktiver oder pulveriger Form eingesetzt. Auch Mischungen der Metalloxide können verwendet werden.

Neben den organyloxysilylfunktionellen Thioharnstoffen können gegebenenfalls weitere Beschleuniger eingesetzt werden.

Dazu gehören die Verbindungen der Sulfenamidklasse wie z.B. Benzothiazyl-2-cyclohexylsulfenamid oder Gunididinderivate wie zum Beispiel Diphenylguanidin oder Di-ortho-tolylguanidin und gegebenenfalls Schwefel.

Im Falle ihrer Verwendung setzt man insgesamt 0,5 bis 2 phr dieser zusätzlichen Beschleuniger ein.

Weiterhin können die vulkanisierbaren Halogenkautschukmischungen auch weitere übliche Organosilanverbindungen wie z.B. des Typs Bis-(3-trialkoxysilylpropyl)-tetrasulfids bzw. des entspr. Sulfids und/oder des Typs ω-Halogenalkyltrialkoxysilane enthalten, wie es in der DE-PS 29 33 345 (= US-PS 4 278 587) in Bezug auf andere Kautschukmischungen bereits beschrieben wird, oder auch Vinyltrialkoxysilane oder Aminoalkyltrialkoxysilane. Die neuen Halogenkautschuk-Mischungen werden auf folgende Weise hergestellt. Vorgezogen wird ein zweistufiger Mischzyklus. In der ersten Stufe werden in einer Knetvorrichtung bei Durchflußtemperaturen zwischen 55 und 65°C, vorzugsweise von 60°C, folgende Bestandteile gemischt:

Innerhalb der ersten Minute der Kautschuk und das Metalloxid, beispielsweise also das Polychlorbutadien und das Magnesiumoxid;

innerhalb der dann folgenden anderthalb Minuten die Hälfte des silikatischen Füllstoffs und die übrigen Füllstoffe;

innerhalb der darauf folgenden anderthalb Minuten die zweite Hälfte des silikatischen Füllstoffs, die gegebenenfalls vorgesehenen weiteren Organosilanverbindungen, der Weichmacher, z.B. das Weichmacheröl und die übrigen Mischungsbestandteile mit Ausnahme der organyloxysilylfunktionellen Thioharnstoffe gemäß den Formeln I oder II und des Zinkoxids;

nach insgesamt vier und einer halben Minute wird die Mischung aus dem Kneter ausgefahren.

In der zweiten Mischungsstufe wird zu der Vormischung aus der ersten Mischungsstufe nun auf einem Walzenpaar bei einer Durchflußtemperatur von etwa 45 bis 55°C, vorzugsweise von 50°C, das Zinkoxid und die organyloxysilylfunktionellen Thioharnstoffe sowie die gegebenenfalls eingesetzten weiteren Beschleuniger zugesetzt.

Dieses zweistufige Mischungsverfahren vermeidet das vorzeitige Anvulkanisieren der Mischung.

Industrielle Einsatzgebiete für die beschriebenen Kautschukmischungen und deren Vulkanisate sind beispielsweise:

Technische Gummiartikel wie Kabelmäntel, Schläuche, Heizschläuche, Treibriemen, Keilriemen, Förderbänder, Walzenbelege, Dichtungen, elektrische Isolierungen, Auskleidungen, Imprägnierungen und Beschichtungen von hitzebeständigen Geweben, Dämpfungs- und Vibrationselemente und dergleichen Artikel, an die

hohe Anforderungen hinsichtlich Temperatur- und bzw. Ölbeständigkeit gestellt werden.
Im folgenden werden einige beispielhafte Rezepturen für die neuen Halogenkautschuk-Mischungen mit Prüfergebnissen, einschließlich der Vernetzungsprodukte, mit Auswertungen bzw. Vergleichen dieser Ergebnisse gegeben.
Darin wiederholen sich viele verschiedene Begriffe, so daß folgende Abkürzungen verwendet werden.

Prüfungsnormen

Die physikalischen Prüfungen wurden bei Raumtemperatur nach folgenden Normvorschriften ausgeführt:

| Zugfestigkeit, | |
|---|---|
| Spannungswert 100 %<br>Spannungswert 200 %<br>Bruchdehnung<br>Compression Set | <br>DIN 53504 gemessen in MPa<br>DIN 53504 gemessen in %<br>ASTM D 395, Methode B gemessen in % |

In den Anwendungsbeispielen werden folgende Namen und Abkürzungen benutzt, deren Bedeutungen im folgenden angegeben werden:
Baypren® 210: Polychloroprenkautschuk (polymerisiertes 2-Chlor-1,3-butadien)
CORAX®N 762: Ruß, BET-Oberfläche 30 $m^2/g$ (Degussa)
Ultrasil®VN 3: feinteilige gefällte Kieselsäure, BET-Oberfläche 175 $m^2/g$ (Degussa)

Beispiel 1

| | | 1 | 2 | 3 | 4 | 5 |
|---|---|---|---|---|---|---|
| Baypren 210 | | 100 | 100 | 100 | 100 | 100 |
| MgO, extra leicht | | 4 | 4 | 4 | 4 | 4 |
| Stearinsäure | | 1 | 1 | 1 | 1 | 1 |
| CORAX N 762 | | 30 | 20 | 20 | 20 | 20 |
| Ultrasil VN 3 | | - | 10 | 10 | 10 | 10 |
| ZnO, RS | | 5 | 5 | 5 | 5 | 5 |
| Dibutylthioharnstoff | | 0,75 | 0,75 | - | - | - |
| SL 34-3-3 | | - | - | 1,33 | - | - |
| SL 34-3-5 | | - | - | - | 1,28 | - |
| SL 34-3-6 | | - | - | - | - | 1,44 |
| Vulkanisation: $t_{95}$% bei 170°C | | | | | | |
| Zugfestigkeit | MPa | 13,6 | 13,7 | 15,0 | 13,6 | 12,3 |
| Spannungswert 100% | MPa | 2,1 | 2,0 | 2,1 | 2,3 | 2,1 |
| Spannungswert 200% | MPa | 5,8 | 4,5 | 6,0 | 6,2 | 5,7 |
| Bruchdehnung | % | 310 | 370 | 370 | 310 | 320 |
| Compression Set Methode B, 22 h 70°C | | 6,1 | 6,6 | 7,2 | 6,0 | 5,6 |

Beispiel 1 zeigt, daß durch die Anwendung von SL 34-3-3, SL 34-3-5 und SL 34-3-6 im Vergleich zu Dibutylthioharnstoff bei Anwendung von 20 phr Ruß und 10 phr VN 3 gleiche Vulkanisateigenschaften erzielbar sind, wobei durch die SL-Verbindungen sogar eine Tendenz zu höherem Spannungswert festzustellen ist.
Mit den SL-Verbindungen werden überraschenderweise sogar die Werte der Dibutylthioharnstoffmischung mit reiner Rußfüllung erreicht.

Beispiel 2

| | | 6 | 7 | 8 | 9 | 10 |
|---|---|---|---|---|---|---|
| Baypren 210 | | 100 | 100 | 100 | 100 | 100 |
| MgO, extra leicht | | 4 | 4 | 4 | 4 | 4 |
| Stearinsäure | | 1 | 1 | 1 | 1 | 1 |
| CORAX N 762 | | 30 | 20 | 20 | 20 | 20 |
| Ultrasil VN 3 | | - | 10 | 10 | 10 | 10 |
| ZnO, RS | | 5 | 5 | 5 | 5 | 5 |
| Dibutyltioharnstoff | | 0,75 | 0,75 | - | - | - |
| SL 34-3-8 | | - | - | 1,79 | - | - |
| SL 34-3-9 | | - | - | - | 1,56 | - |
| SL 34-3-4 | | - | - | - | - | 1,94 |
| Vulkanisation: $t_{95}$% bei 170°C | | | | | | |
| Zugfestigkeit | MPa | 13,6 | 13,9 | 12,8 | 16,0 | 8,5 |
| Spannungswert 100% | MPa | 2,1 | 2,0 | 2,4 | 2,0 | 3,1 |
| Spannungswert 200% | MPa | 5,8 | 4,5 | 6,7 | 5,5 | - |
| Bruchdehnung | % | 310 | 375 | 280 | 410 | 190 |
| Compression Set B | | | | | | |
| 22 h 70°C | | 6,4 | 6,1 | 5,6 | 5,8 | - |
| 70 h 100°C | | 12,1 | 14,7 | 10,3 | 9,2 | - |

Dieses Beispiel zeigt, daß SL 34-3-8, SL 34-3-9 und SL 34-3-4 in Ruß/Kieselsäuremischungen auf Basis Baypren 210 analoge Eigenschaften wie der Dibutylthioharnstoff ergeben, wobei auch hier die SL-Verbindungen mit Kieselsäure die Eigenschaften von Dibutylthioharnstoff bei reiner Rußfüllung erreichen.

Beispiel 3

| | | 11 | 12 | 13 | 14 |
|---|---|---|---|---|---|
| Baypren 210 | | 100 | 100 | 100 | 100 |
| MgO, extra leicht | | 4 | 4 | 4 | 4 |
| Stearinsäure | | 1 | 1 | 1 | 1 |
| CORAX N 762 | | 30 | 20 | 20 | 20 |
| Ultrasil VN 3 | | - | 10 | 10 | 10 |
| ZnO, RS | | 5 | 5 | 5 | 5 |
| Ethylenthioharnstoff | | 0,75 | 0,75 | - | - |
| SL 34-2-6 | | - | - | 1,95 | - |
| SL 34-3-12 | | - | - | - | 2,25 |
| Vulkanisation: $t_{95}$% bei 170°C | | | | | |
| Zugfestigkeit | MPa | 14,4 | 12,4 | 12,2 | 13,4 |
| Spannungswert 100% | MPa | 2,8 | 2,5 | 2,6 | 2,8 |
| Spannungswert 200% | MPa | 8,0 | 5,6 | 6,9 | 7,6 |
| Bruchdehnung | % | 280 | 300 | 280 | 270 |
| Compression Set B | | | | | |
| 22 h 70°C | | 6,0 | 7,7 | 5,7 | 4,6 |
| 70 h 100°C | | 13,2 | 14,5 | 13,8 | 13,5 |

Auch die beiden silylierten Ethylenthioharnstoffe SL 34-2-6, SL 34-3-12 zeigen gleiches Eigenschaftsbild wie der reine Ethylenthioharnstoff. Die SL-Verbindungen zeigen auch bei Verwendung eines Ruß/Kieselsäure-Verschnitts ein gleiches Eigenschaftsbild wie Ethylenthioharnstoff eingesetzt in reinen Rußmischungen.

## Patentansprüche

**1.** Vulkanisierbare Kautschukmischungen, enthaltend mindestens einen Halogenkautschuk, und silikatischen Füllstoff, dadurch gekennzeichnet,
daß sie als Beschleuniger mindestens einen substituierten organyloxysilylfunktionellen Thioharnstoff der allgemeinen Formel (I)

$$(RO)_{3-b}\overset{(CH_3)_b}{\overset{|}{Si}} - (CHX)_a-NR^1-CS-NR^2R^3$$

oder der allgemeinen Formel (II)

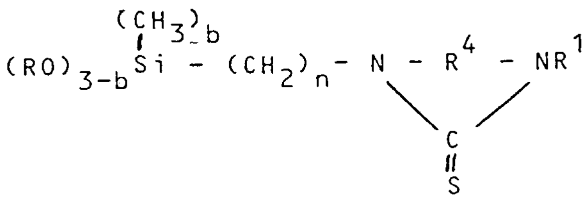

in einer Menge von 0,5 - 5,0 phr enthalten, wobei bedeuten:

- b: 0;1 oder 2
- R: Alkyl mit 1 bis 6 C-Atomen
  Cycloalkyl mit 5 bis 7 C-Atomen
  Aryl,
- X: Wasserstoff, wenn a = 1 , 3, 4, 5 oder 6,
  oder X:

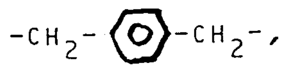

  wenn a = 1
- $R^1$: Wasserstoff,

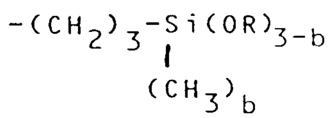

- $R^2$: Wasserstoff
- $R^2$,$R^3$: gleich oder verschieden,
  Alkyl mit 1 bis 8 C-Atomen,
  Alkenyl mit 1 bis 8 C-Atomen,
  Aryl,
  Aralkyl,

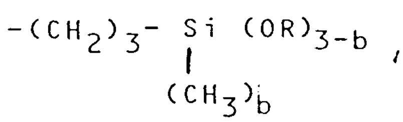

- $R^4$: Alkylen mit 1 bis 4 C-Atomen,
  Arylen,
- n: eine ganze Zahl von 1 bis 6,.

**2.** Vulkanisierbare Kautschukmischungen gemäß Anspruch 1,
dadurch gekennzeichnet, daß in den allgemeinen Formeln (I) und (II) bedeuten:

- R : Phenyl
- $R^2$, $R^3$: Phenyl, Naphtyl, Benzyl, Phenethyl
- $R^4$: - $CH_2$-$CH_2$ -, 1,2 Phenylen
- n: 1 oder 3

## Claims

**1.** Vulcanisable rubber mixtures containing at least one halogen rubber and silicate filler, characterised in that they contain, as accelerator, at least one substituted organyloxysilyl functional thiourea corresponding to the general formula (I)

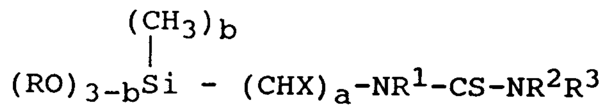

or the general formula (II)

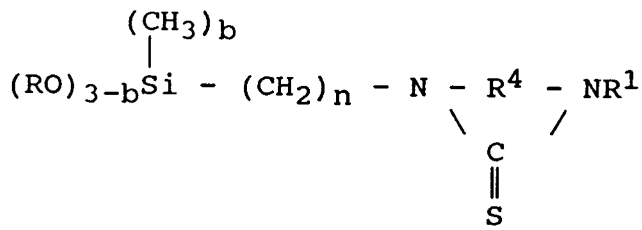

in a quantity of from 0.5 - 5.0 phr, wherein

- b: 0, 1 or 2,
- R: an alkyl having 1 to 6 carbon atoms, a cycloalkyl having 5 to 7 carbon atoms or aryl,
- X: hydrogen when a = 1, 3, 4, 5 or 6 or X:

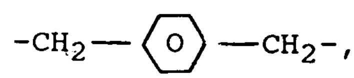

when a = 1,

- $R^1$: hydrogen or

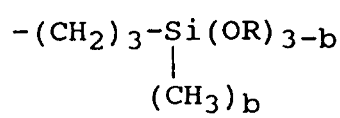

- $R^2$: hydrogen,
- $R^2$,$R^3$: identical or different, an alkyl having 1 to 8 carbon atoms, an alkenyl having 1 to 8 carbon atoms, aryl, aralkyl or

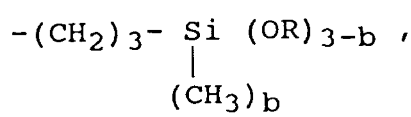

- $R^4$: an alkylene having 1 to 4 carbon atoms or arylene and
- n: an integer from 1 to 6.

**2.** Vulcanisable rubber mixtures according to Claim 1, characterised in that in the general formulae (I) and (II),

- R : phenyl,
- $R^2$, $R^3$: phenyl, naphthyl, benzyl, phenethyl,

$R^4$: $CH_2$ - $CH_2$ or 1,2-phenylene and
n: 1 or 3.

## Revendications

1. Mélanges de caoutchouc vulcanisables, contenant au moins un caoutchouc halogéné et une charge silicatée, caractérisés en ce qu'ils contiennent comme accélérateur au moins une thio-urée à fonction trialcoxysilyle substituée de formule générale (I)

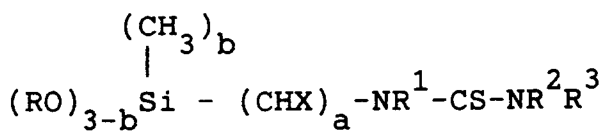

ou de formule générale (II)

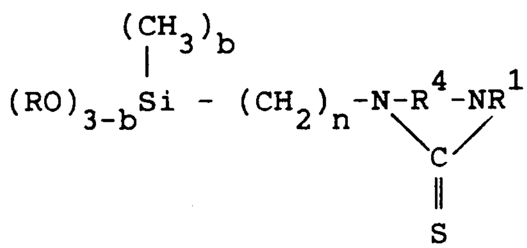

à une concentration de 0,5 - 5,0 % dans laquelle sont représentés :

b : 0,1 ou 2
R : un alkyle de 1 à 6 atomes de C,
un cycloalkyle de 5 à 7 atomes de C,
un aryle,
X : l'hydrogène quand a = 1, 3, 4, 5 ou 6,
ou X :

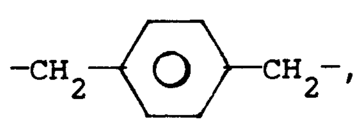

quand a = 1
$R^1$: l'hydrogène,

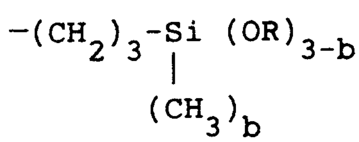

$R^2$: l'hydrogène
$R^2$, $R^3$ : identiques ou différents,
alkyle de 1 à 8 atomes de C,
alcényle de 1 à 8 atomes de C,
aryle,
aralkyle,

$$-(CH_2)_3-\underset{\displaystyle (CH_3)_b}{\underset{|}{Si}}(OR)_{3-b}$$

$R^4$ : alcylène de 1 à 4 atomes de C, arylène,

n : un nombre entier de 1 à 6.

**2.** Mélanges de caoutchouc vulcanisables selon la revendication 1, caractérisés en ce que dans les formules générales (I) et (II) sont représentés :

R : phényle

$R^2$, $R^3$ : phényle, naphtyle, benzyle, phénéthyle,

$R^4$ : - $CH_2$-$CH_2$ -, 1,2 phénylène

n : 1 ou 3